# EUROPEAN PATENT APPLICATION

(11) **EP 3 757 841 A1**
(43) Date of publication of application: **30.12.2020**
(21) Application number: 20175878.6
(22) Date of filing: 21.05.2020
(51) Int. Cl.: G06F 21/57

(54) **METHODS AND DEVICES FOR CONTEXT-BASED STRING ANALYSIS FOR VULNERATBILITY DETECTION**

(30) Priority: 27.06.2019 US 201916454323
(71) Applicant: BlackBerry Limited, Waterloo, Ontario N2K 0A7 (CA)
(72) Inventor: Boulton, Adam John, Waterloo, Ontario N2K 0A7 (CA); McCOURT, William James, Waterloo, Ontario N2K 0A7 (CA); Godwood, Benjamin John, Waterloo, Ontario (CA)
(74) Representative: Hanna Moore + Curley

(57) **Abstract**

Described are methods and computing devices for identifying potential vulnerabilities in a software package. The package includes build files that include an application file and one or more associated files. The method may include scanning the application file to identify and extract a string from the application file and determining that the string is referenced in one of the associated files and obtaining data associated with the string from the associated file. The string may then be classified based, in part, on the data obtained from the associated file, and a full context may be determined for the string based, at least in part, on the classification. A relevance rank for the string is then set based on the full context and the string and its relevance rank are output.

## Description

### FIELD

The present disclosure relates to vulnerability analysis of software code and, in particular, methods and systems to detect vulnerabilities using context-based string analysis.

### BACKGROUND

Modern software is often large and complex. The size and complexity, along with the staged development and testing, can sometimes lead to vulnerabilities in a final software build. In many cases, a complex software package may include code developed by a number of different vendors. Poorly-designed software that does not reflect best practices in software design may make maintenance and patching more difficult. The staged development of software packages may also lead to vulnerabilities in terms of data leakage; that is, exposure of information that was not intended to be public.

### SUMMARY

Accordingly there is provided a method, a computing device and a computer program as detailed in the claims that follow.

### BRIEF DESCRIPTION OF THE DRAWINGS

Reference will now be made, by way of example, to the accompanying drawings which show example embodiments of the present application and in which:
Figure 1 shows, in flowchart form, one example method of identifying vulnerabilities in a software package; and
Figure 2 shows, in block diagram form, one simplified example of a computing device for identifying vulnerabilities in a software package.

Like reference numerals are used in the drawings to denote like elements and features.

### DETAILED DESCRIPTION OF EXAMPLE EMBODIMENTS

The present disclosure describes example methods and computing devices for identifying potential vulnerabilities in a software package. The package includes build files that include an application file and one or more associated files. The method may include scanning the application file to identify and extract a string from the application file and determining that the string is referenced in one of the associated files and obtaining data associated with the string from the associated file. The string may then be classified based, in part, on the data obtained from the associated file, and a full context may be determined for the string based, at least in part, on the classification. A relevance rank for the string is then set based on the full context and the string and its relevance rank are output.

In one aspect, the present application describes computer-implemented method of identifying potential vulnerabilities in a software package that includes two or more build files, the build files including at least an application file and one or more associated files. The method may include scanning the application file to identify and extract a string from the application file; determining that the string is referenced in one of the associated files and obtaining data associated with the string from the associated file; classifying the string based, in part, on the data obtained from the associated file; determining a full context for the string based, at least in part, on the classification; setting a relevance rank for the string based on the full context; and outputting the string and its relevance rank.

In some implementations, the data may include a new string to which the string is mapped in the associated file.

In some implementations, the classifying is based on syntax or structure of the string.

In some implementations, classifying includes classifying into a class selected from defined classes, wherein the defined classes include at least one of URLs, email addresses, IP addresses, or key values.

In some implementations, determining the full context includes determining the full context based on a use made, in the application file, of the data associated with the string. In some such implementations, the data associated with the string may include a new string and wherein the use made is the use of the new string.

In some implementations, the application file includes a binary or executable file.

In some implementations, the associated file may be a resource file. In some examples, the resource file may be a string resource file.

In some implementations, outputting the string and its relevance rank includes outputting the string and the data associated with the string

In another aspect, the present application describes a computing device for identifying vulnerabilities in a software package that includes two or more build files, the build files including at least an application file and one or more associated files. The computing device may include one or more processors; memory storing the build files; and a software vulnerability analysis application stored in memory and containing instructions. When executed by the one or more processors, the instructions are to cause the processors to scan the application file to identify and extract a string from the application file; determine that the string is referenced in one of the associated files and obtaining data associated with the string from the associated file; classify the string based, in part, on the data obtained from the associated file; determine a full context for the string based, at least in part, on the classification; set a relevance rank for the string based on the full context; and output the string and its relevance rank.

In yet a further aspect, the present application describes non-transitory computer-readable media storing computer-executable program instructions which, when executed, cause one or more processors to perform the described methods.

Other example embodiments of the present disclosure will be apparent to those of ordinary skill in the art from a review of the following detailed description in conjunction with the drawings.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of... or..." is intended to cover any one or more of the listed elements, including any one of the listed elements alone, any sub-combination, or all of the elements, without necessarily excluding any additional elements, and without necessarily requiring all of the elements.

Modern software is often large and complex. The size and complexity, along with the staged development and testing, can sometimes lead to vulnerabilities in a final software build. In many cases, a complex build incorporates portions developed by different vendors. The quality of the software development may vary among vendors. It is a daunting task for a software developer to ensure that its final customer-ready product does not inadvertently contain vulnerabilities, such as the exposure of information or development details that should not be public, particularly if that software incorporates code from a number of different vendors.

Accordingly, it would be advantageous to have a computer automatically scan all the files of release-ready code, *e.g.* build files, to identify potential issues and permit revision or redesign prior to general release. One possible option is to unpackage a build to obtain an application file or files and one or more associated files, and to scan all the files to identify strings. The identified strings may then be listed and software developer may then manually review the list in hopes of noticing any suspicious strings. However, in any sizable software package this would result in a huge list of strings. Most strings are benign and perfectly suitable. Manual review would be costly in terms of time and likely to result in missed vulnerabilities due to human error.

In a software package that complies with the separation-of-concerns principle, the package will include at least one application file and one or more associated files. The associated files may be referred to as "resource files" in some examples below, although the present application is not restricted to implementations using the Android™ operating system. The associated files contain specifics and definitions, such as specific strings for display, specific URLs to be accessed, specific layout details or parameters for a screen size, specific labels for user interface elements, specific environment variables, *etc.* In one example, a resource file is a non-executable data file that is used by an application file. For example, it can include one or more string resources that can be null-terminated Unicode or ASCII strings. Usually, when an application is executed (from the application file), it loads the one or more string resources. The file extension of a resource file is linked to the programming language used for creating the application. For example, a resource file associated with an ASP.NET application uses the .resx extension and is in XML format. The application file may contain higher level organization of components and their interaction. It will make reference to generically named parameters, environment variables, *etc.,* for which the associated files supply the actual string, URL, parameter, label, *etc.* In some cases, the associated files include multiple alternatives for a generically named parameter to account of various device configurations possibilities.

Accordingly, an application file is intended to be executed, and relies on a resource file for getting and/or substituting values associated with strings. An application file may be a binary file (such as an executable program), or an assembly code file, or a source code file. As an example, in the case of an Andriod™-based device, the application file may be a DEX file, or in the case of a Linux-based device, the application file may be an ELF file.

If a system were used to scan build files and to list identified strings, then a large collection of benign and uninteresting strings would clutter the results, making it difficult to identify possible vulnerabilities, such as data leakage. In some cases, the automated scanning may include attempting to identify whether the string conforms to a particular type or class that is of higher risk. For example, the string may have the structure of format indicative of a URL, an email address, an IP address, a private/public key, a passphrase, or other sensitive data. However, in many software packages, particularly those properly structured to respect separation-of-concerns, it may be difficult to identify how a specific string is used or applied.

In accordance with one aspect of the present application, build files may be automatically analyzed to identify potential vulnerabilities. In particular, a computing device may scan an application file and one or more associated files to identify strings that are referenced in the application file and that are further defined or specified in one of the associated files. A relevance rank for a string may then be determined based on contextual information from both the application file and the associated file. The reference in the application file may appear benign, but when connected to the actual parameter or value in the associated file, a full context may give greater significance to a string and its actual use.

Many of the examples herein refer to identifying "strings". The term "string" in this application refers to alphanumeric text within the code. In some cases a "string" may be intended for output in a message, display, or other user interface. In some cases, a "string" may be an internal label assigned to a variable or parameter within the code. In some cases, a "string" may be a parameter that is passed to a process as an argument, for example. Strings may include, for example, labels for variables, parameter names, labels for input fields or buttons, GUI elements, text output, URLs, email addresses, passphrases, *etc.* Those ordinarily skilled in the art will be familiar with the mechanisms for scanning files and identifying strings and the various algorithms that may be used identify certain categories of strings. In some implementations, a string can be a sequence of characters associated with data or values. Examples of "strings" include ASCII and UTF-8 character sequences. In some examples, the sequence may need to be at or above a minimum length to qualify as a string. Examples include two characters, three characters, four characters, or more.

In some implementations, the computing device may be operated by the software developer for analyzing its pre-release software builds. In some other implementations, the computing device may be operated by a service provider that offers to analyze pre-release software builds for software developers. In the latter case, the software developer may cause a build to be uploaded to a server operated by the service provider to have its build analyzed and the results may then be provided to the software developer.

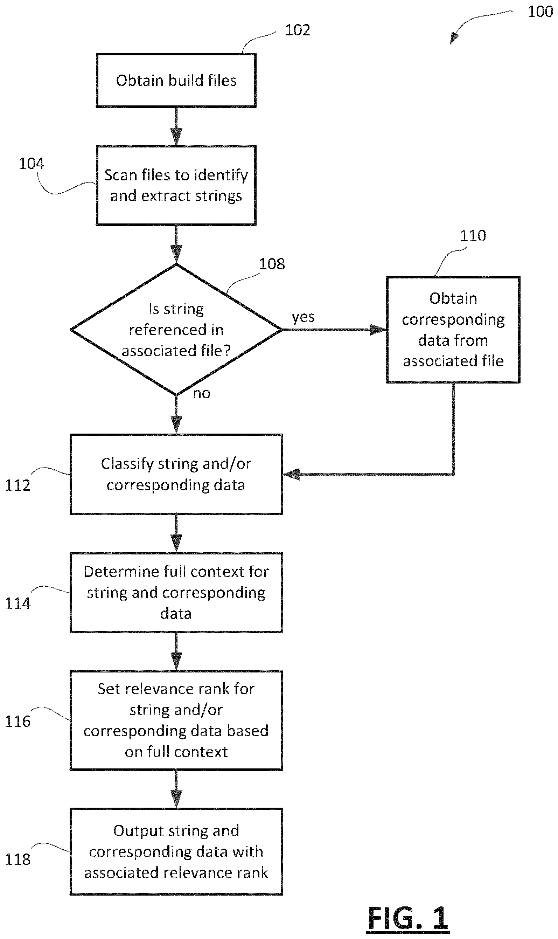

Reference is now made to Figure 1, which shows, in flowchart form, one example method 100 for identifying potential vulnerabilities in a software build. The method 100 is carried out by a computing device that obtains, in operation 102, build files for a software build. The build files may be uploaded or transmitted to the computing device. Obtaining the files may include unpackaging, decrypting, unzipping or otherwise extracting the files from a software container or package in which they are provided. The build files include at least one application file and one or more resource files. In general, the application file contains operational flow instructions and references the resource files. The resource files may include files of various types, but generally they provide specifics of an implementation. For example, a resource file may include specific labels, text, or values that are mapped to more generic references that are used by the application file. To use Android™ as an example, a manifest file will declare the components of an application and various features and permissions required for the application. The components may include activities, services, broadcast receivers and content providers. However, all the details of the visual presentation, including icons, images, audio, video, menus, layout, text, etc., are all defined in xml resource files grouped in a res/ directory. Within that general resources directory are a set of subdirectories for various things, such as values, layout, font, menu, etc. Those subdirectories may hold various resources files. For example, the values subdirectory may hold a strings.xml file.

In operation 104 the computing device scans the files to identify and extract strings. In one example, when the application file is a binary file, a reverse engineering program (such as IDA Pro, etc.) may be used for identifying strings.

When a string is identified in an application filed, the computing device further assesses whether that string is referenced in one of the associated files, as indicated by operation 108. If so, then in operation 110 the computing device obtains corresponding data from the associated file. The nature of the corresponding data may vary depending on the file type and the nature of the reference to the string. For example, the string may be given a specific value in the associated file. In one example, the string may be translated or mapped to another string. That is, the string from the application file may be generic label or name, and the associated file may supply the corresponding specific label or name for a specific implementation. To illustrate, consider a generic string in an application file like "username" or "set_key" or "ipaddr". In an application file those strings may be mapped to more specific strings, such as "administrator1" or "93BC397F938D938AE372" or "168.212.10.204". In these examples, the string from the application file is mapped or translated to a new string in the associated file. However, in some cases, the associated file may not translate or map the string to a new string. For example, some strings may correspond to specific styles, menus, layouts or other parameters that are defined in associated files.

In operation 112 the string and/or the corresponding data is classified. If the string was not referenced in an associated file or the associated file did not translate or map the string to a new string, then the classification may be based on the original string from the application file. If the string is mapped to a new string then either the new string may be classified or both strings may be classified. The association between the string and the new string is maintained, in any event. In one implementation, the association may result in both strings (the original string and the new string to which it is mapped) falling into a classification into which either of them is placed.

In some embodiments, keyword matching may be employed to identify specific strings of significant interest, such as "password", "login", "username", "key value" or the like. These specific strings may be of heightened interest in that they may either be further defined in an associated file with a parameter that may reflect inadvertent credential leakage, or may be attached to a GUI input field and reflect solicitation of user input of sensitive data worthy of closer analysis.

In some embodiments, as an alternative to or in addition to keyword matching, the classification may include categorizing a string based on its structure or features. For example, a string may be classed as a URL or URI based on having a structure confirming to IETF syntax. For example a URL may have the structure <scheme>://<hostname>/<filename>. As another example, an email address may be identified based on its structure <username>@<hostname>. Other classifications may be less based on strict syntax analysis. For example, a possible key value class may be based on pseudorandom looking strings of certain lengths. Such strings may be composed of certain characters, such as only hexadecimal characters as an example. In one example implementation, an entropy measurement may be made to assess the "randomness" of a string, where a long highly-random string is indicative of a pseudo-random string likely serving as a key. Yet other classes or string types may be determined, for example a base64 encoded string.

Having determined a classification, if any, for the string and/or the new string, the computing device then determines full context for the string and/or the corresponding data in operation 114. The determination of full context may take into account contextual data from the application file and/or the associated file. For example, the contextual data may relate to how the string and/or the corresponding data is used in the application file. For example, it may be associated with an input field or GUI element, or may be passed as an argument to a component, or it may be concatenated with other data that is then used in another portion of the application file. The type of use made of the string may provide important contextual information. One example relates to environment variables. During automatic disassembly, the analysis may spot a call to getenv, as is described in an example below. If this value had previously been set in the application, the disassembly engine may be able to track this and whenever the value from the getenv call is used it may be automatically replaced with the appropriate value.

In operation 116, a relevance rank is determined for the string and/or new string based, at least in part, on the full context and/or classification. That is, the class into which the string or new string is categorized may impact the determination of the relevance rank. Likewsie the full context may impact the determination of the relevance rank. The relevant rank is output together with the string and/or new string in operation 118. This may include outputting strings to a display. The strings may be listed based on classification and/or relevance rank. Various operations for sorting or obtaining further contextual information regarding the strings and their usage in the application file may be requested through suitable GUI elements on the display.

To illustrate by example, consider a set of build files that include an Executable and Linkable Format (ELF) binary file and a shell script file. A portion of the ELF binary file may be designed to obtain data from an Amazon Web Services (AWS) server. Access to the server may be based on an AWS key. The ELF binary, which may be named "download_helper" in this example, may include the following:

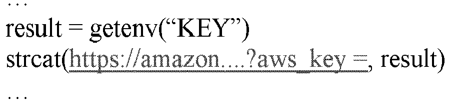

It will be appreciated that the string concatenation sets up a URL containing a query that passes an AWS key to the AWS server, where the key is "result", and "result" depends on pulling an environment variable labelled as "KEY".

In scanning the "download helper" ELF binary file for strings, certain strings may be identified, such as the URL and its incorporation of the parameter labelled "result", and the link in which "result" is equated to the environment variable labelled "KEY". In accordance with the methods described herein, the computing device conducting the analysis of the build files also notes that one of the associated files, in particularly the shell script, also makes reference to the string "KEY". The shell script may include:

```
              export KEY="sadhsdfhsdjhfjhsdjhfhsdkjhfhdsjkfdj543dlsjfj sdklYTYFG" #
              Set an environment variable
              ./download.helper # execute ELF binary
```

On its own, the shell script only reveals that a variable labelled "KEY" is set to a pseudorandom string. Together with the ELF binary, the full context for the string "KEY" is that it is passed into a query as part of a URL to obtain access to an AWS server. This usage of the KEY parameter reveals much more detail about the potential leakage of key details.

The same example may be illustrated using different coding syntax. In this example, an Android™ application uses string resources to store the AWS key. The Andriod™ binary (classes.dex) may include the following snippet of Java code:

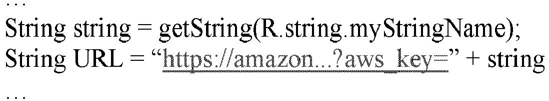

The string resources file (strings.xml) may then include the following:

```
   <?xml version="1.0" encoding="utf-8">
   <resources>
       <string
   name="my StringName">sadhsdfhsdj hfj hsdj hfhsdkj hfhdsj kfdj 543 dlsjfjsdklYTYFG</strin
   g>
   </resources>
```

In scanning the Java code from the binary, the computing device may identify strings such as "myStringName" and the URL. However, when "myStringName" is found to exist in the string resources file, then it reveals that a specific key value is hardcoded in the resources file and is being passed to the URL query to an AWS server. This more fulsome context reveals potential key leakage.

The full context reveals that (a) the associated file contains a string that appears to be a key value and may be classified as such due to its syntax and structure, *i.e.* it is a pseudorandom string of a certain length, (b) that key value is used in the application file and associated with a label "aws_key" and/or the label "KEY", either of which may be recognized as signaling that the string relates to a key, and (c) the string is being inserted into an URL as a query. It may further be identifies that the URL is to a specific domain.

A relevance rank may be determined based on one or more of these factors revealed in the full context. For example, the fact that the string in the associated file is a key value and that it used in a URL query may result in a relatively high ranking of potential relevance. Likewise the strings "KEY" and/or the URL string may receive relative high rankings both because of their classifications due to keyword matching and/or structure, and because of their link to a string in the associated file that contains a string that is classified as a likely key value based on its structure.

The relevance rankings may result in highlighting or more prominent display of the identified string(s) as compared to more benign strings that have a lower relevance ranking.

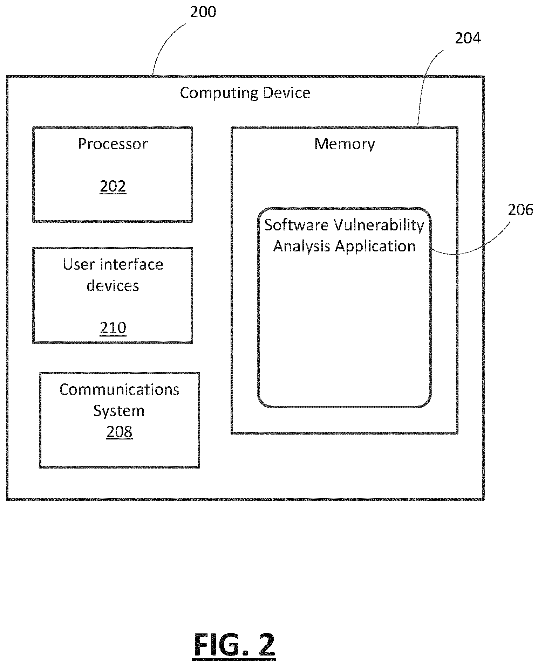

Reference is now made to Figure 2, which shows, in block diagram form, one simplified example of a computing device 200 for identifying vulnerabilities in software packages. The computing device 200 may include one or more processors 202 and memory 204. The computing device 200 may include an operating system stored in memory and executable by the processors 202 to carry out basic device functions and to provide a platform for execution of application software.

The memory 204 may include persistent data storage and temporary data storage. The memory 204 may include a software vulnerability analysis application 206 that, when executed by the one or more processors 202, causes the processors 202 to carry out the operations described herein. The memory 204 may further include the software package and/or build files that are to be subjected to analysis.

User interface devices 210 may include a display and/or one or more user input devices, such as a keyboard, mouse, touchscreen, etc.

The computing device 200 may also include a communications system 208 providing network connectivity to enable the sending and receiving of data with remote devices. In some cases, the communications system 208 may provide for Internet connectivity, whether through wired connection, wireless connection, or both.

It will be appreciated that it may be that some or all of the above-described operations of the various above-described example methods may be performed in orders other than those illustrated and/or may be performed concurrently without varying the overall operation of those methods.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A computer-implemented method of identifying potential vulnerabilities in a software package that includes two or more build files, the build files including at least an application file and one or more associated files, comprising:
scanning the application file to identify and extract a string from the application file;
determining that the string is referenced in one of the associated files and obtaining data associated with the string from the associated file;
classifying the string based, in part, on the data obtained from the associated file;
determining a full context for the string based, at least in part, on the classification;
setting a relevance rank for the string based on the full context; and
outputting the string and its relevance rank.

2. The method of claim 1, wherein the data includes a new string to which the string is mapped in the associated file.

3. The method of claim 1 or 2, wherein classifying is based on syntax or structure of the string.

4. The method of any preceding claim, wherein classifying includes classifying into a class selected from defined classes, wherein the defined classes include at least one of URLs, email addresses, IP addresses, or key values.

5. The method of any preceding claim, determining the full context includes determining the full context based on a use made, in the application file, of the data associated with the string.

6. The method of claim 5, wherein the data associated with the string comprises a new string and wherein the use made is the use of the new string.

7. The method of any preceding claim, wherein the application file includes a binary or executable file.

8. The method of any preceding claim, wherein the associated file comprises a resource file.

9. The method of claim 8, wherein the resource file includes a string resource file.

10. The method of any preceding claim, wherein outputting the string and its relevance rank includes outputting the string and the data associated with the string.

11. A computing device for identifying vulnerabilities in a software package that includes two or more build files, the build files including at least an application file and one or more associated files, the computing device comprising
one or more processors;
memory storing the build files; and
a software vulnerability analysis application stored in memory and containing instructions that, when executed by the one or more processors, are to cause the processors to carry out the method of any preceding claim.

12. A computer program which, when executed on a processor of a computing device, is configured to cause the computing device to carry out the method of any one of claims 1 to 10.
